# EUROPEAN PATENT SPECIFICATION

(11) **EP 2 975 288 B1**
(45) Date of publication and mention of the grant of the patent: **21.06.2017**
(21) Application number: 15176728.2
(22) Date of filing: 14.07.2015
(51) Int. Cl.: F16D 69/04, F16D 65/092

(54) **PAD FOR DISC BRAKES FOR RAILWAY VEHICLES**
BELAG FÜR SCHEIBENBREMSEN FÜR SCHIENENFAHRZEUGE
PLAQUETTE DE FREINS À DISQUE POUR VÉHICULES FERROVIAIRES

(30) Priority: 14.07.2014 IT RM20140384
(43) Date of publication of application: 20.01.2016
(73) Proprietor: Cofren S.r.L., 83100 Avellino (IT)
(72) Inventor: DE SOCCIO, Vittorio, 82100 Benevento (IT)
(74) Representative: Bosman, Cesare

(56) References cited:
- EP-A1- 2 085 637
- EP-A1- 2 119 934
- EP-A1- 2 730 798
- DE-C1- 19 727 705

## Description

The present invention concerns a pad for disc brakes for railway vehicles.

As is known, disc brakes are subject to considerable stress, and good transmission of the braking force from the pad to the disc is necessary to obtain an optimal braking action.

For some time now, the trend has been to use pads which have a plurality of small friction elements, instead of one single larger friction element. In one of the solutions adopted in this regard, each pad consists of one main carrier plate, a plurality of support plates fixed to the carrier plate and a plurality of friction elements fixed individually or in pairs on the respective support plates. This solution is for instance known from DE 197 27 705 C1. The pads in question, in addition to exerting an effective pressure on the disc in terms of braking, must also ensure a low noise level during the braking action. It should be noted that low noise level has become an increasingly important discriminating factor in the choice of disc brakes.

As may be obvious to a person skilled in the art, the above requirements are closely linked to the way in which the friction elements exert the pressure on the disc.

Recent solutions have featured the use of a plurality of elastic elements, each of which is arranged between the carrier plate and a respective support plate. Although this solution has entailed a considerable improvement in terms of noise level reduction during braking, nevertheless, due to the complexity of the solution and a growing demand for noise level reduction, the need for even more effective solutions is felt in the sector.

The Applicant has produced a particular pad solution, the technical characteristics of which are such as to guarantee a high braking efficiency together with a low noise level and simple manufacture.

The subject of the present invention is a pad for disc brakes for railway vehicles, the essential characteristics of which are described in claim 1, and the preferred and/or auxiliary characteristics of which are described in claims 2-5.

For a better understanding of the invention, an embodiment is described below for purely illustrative non-limiting purposes with the help of the figures of the accompanying drawing, in which:
figure 1 is a rear view showing transparently parts of the pad subject of the present invention;
figure 2 is a front view of the pad of figure 1;
figure 3 is a lateral view of the pad of figure 1;
figure 4 is a cross section according to the line IV-IV of figure 1;
figure 5 is a cross section according to the line V-V of figure 1.

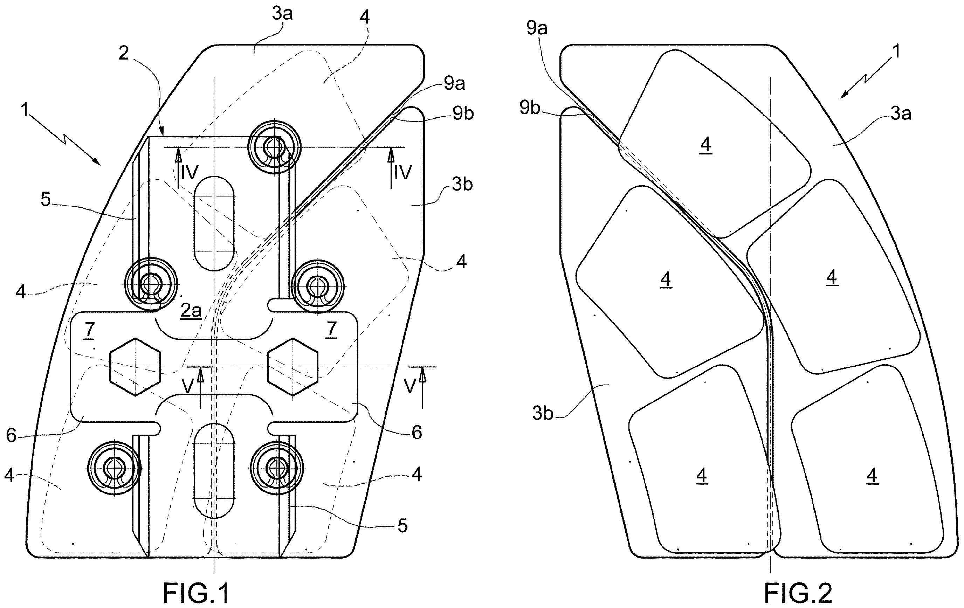

In figure 1 the number 1 indicates as a whole a pad subject of the present invention.

The pad 1 comprises a rear interlocking plate 2 for fixing the pad to the structure of the disc brake, two support plates 3a and 3b, fixed reversibly to said rear interlocking plate 2 and a plurality of friction elements 4 fixed reversibly to the two support plates 3.

The rear interlocking plate 2 comprises a substantially rectangular shaped interlocking portion 2a in which part of two long sides 5 are bent to form a male portion of a dovetail joint, and two fixing portions 6 manufactured as one single piece together with the interlocking portion 2a and extending transversely and on opposite sides relative to said interlocking portion 2a.

The two fixing portions 6 define two coplanar fixing surfaces 7 in each of which a respective through hole 8 is obtained for reversible coupling with a respective support plate 3a, 3b. In particular, the two fixing surfaces 7 lie on a plane which is displaced relative to that of the interlocking portion and on the opposite side relative to the bent edges of the long sides 5.

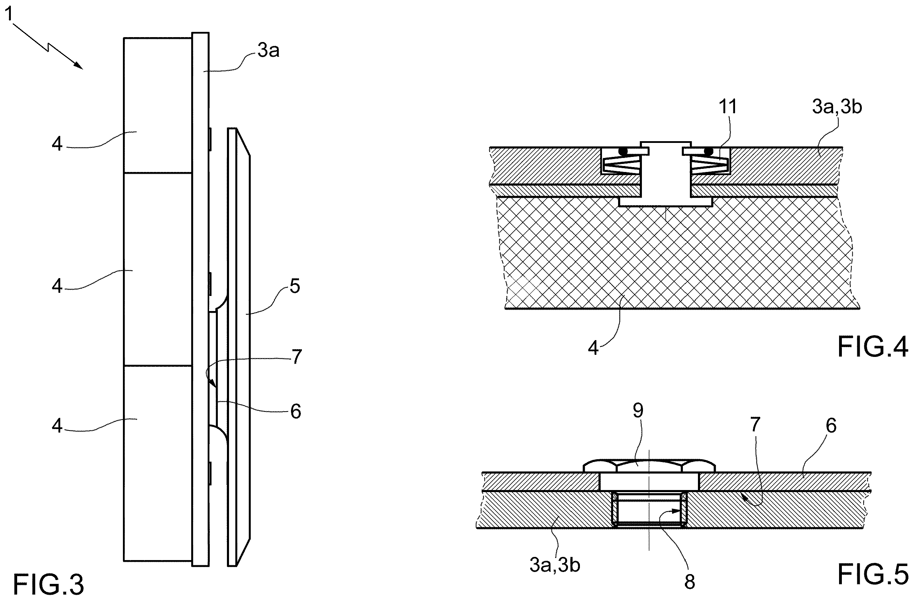

Each of the support plates 3a and 3b is fixed to a respective fixing portion 5 by means of a bolt 9 as illustrated in figure 5.

The support plates consist of a larger support plate 3a (with larger dimensions) and a smaller support plate 3b (with smaller dimensions). Once the pad 1 is assembled on the disc brake, the larger support plate 3a assumes a more peripheral position relative to the disc than the smaller support plate 3b. The two plates are arranged adjacent to each other along two respective inner edges 10a and 10b. The distance between the two edges 10a and 10b is minimum and serves only to leave the space necessary for any thermal expansion of the plates 3a and 3b.

Each of the inner edges 10a and 10b extends along a curved line. In particular, each of the inner edges 10a and 10b has a bend of approximately 45°, with the result that the inner edge 10a of the larger plate 3a defines an angle measuring approximately 135°, while the inner edge 10b of the smaller plate 3b defines an angle measuring approximately 315°.

In each of the support plates 3a and 3b a plurality of through holes are obtained useful for fixing in a reversible manner respective friction elements 4 by means of respective disc springs 11 as illustrated in figure 4.

The friction elements 4 fixed on the larger support plate 3a are in a greater number than those fixed on the smaller support plate 3b. This means that the more peripheral part (with reference to the disc) of the pad subject of the present invention exerts greater friction on the disc than the more central part (with reference to the disc).

In the specific example described, three friction elements 4 are fixed on the larger support plate 3a and two friction elements 4 are fixed on the smaller support plate 3b.
Each of the friction elements has an oblong shape with the two parallel long edges slightly curved. In the support plates 3a and 3b the friction elements 4 are assembled so that their respective long edges are arranged along circumferences parallel to one another. Said arrangement of the friction elements on the pad means that the pad can be assembled on the disc brake in a position such that the long edges of the friction elements form an angle substantially equal to zero with concentric circumferences of the disc. The Applicant has found, in fact, that said arrangement of the friction elements is able to guarantee a high effectiveness in terms of both braking and noise level.

As is clear from the above description, the pad for disc brakes according to the present invention has the advantage of requiring a smaller number of parts than the pads of the known art, which results in a higher yield and lower noise level of the braking.

Furthermore, it should be highlighted that the parts of the pad subject of the present invention are fixed to one another in a reversible manner, which means that there are no weldings with consequent benefits in terms of strength and safety, and that it is possible to interchange the worn parts without having to replace the whole pad.

The presence of two distinct plates fixed to the fixing portion of one single rear interlocking plate provides an elasticity such that it is possible to avoid the presence of any elastic means usually interposed between the support plate and the friction elements.

Essentially, the advantages of the pad for disc brakes subject of the present invention are structural simplicity (fewer pieces to be assembled) combined with a lower noise level, without affecting the braking efficiency.

## Claims

1. A pad (1) for a disc brake for railway vehicles comprising a plurality of friction elements (4), which are suited to act upon a disc of the disc brake, and a rear interlocking plate (2), which comprises an interlocking portion (2a), which is suited to be coupled in a reversible manner to a structure of a disc brake, and two fixing portions (6), which are manufactured as one single piece together with the interlocking portion (2a) and extend transversely and on opposite sides relative to the interlocking portion (2a) itself; said pad being **characterised in that** it comprises two support plates (3a, 3b), each of which is fixed in a reversible manner to a respective fixing portion (6); said support plates being a larger support plate (3a) which, in use, is suited to be arranged in correspondence to a more peripheral position of a disc of the disc brake, and a smaller support plate (3b) which, in use, is suited to be arranged in correspondence to a more central position of a disc of the disc brake; said support plates (3a, 3b) being arranged one adjacent to the other along two respective inner edges (10a, 10b); said friction elements (4) being fixed in a reversible manner to said support plates (3a, 3b); the friction elements (4) fixed to said larger support plate (3a) being in a greater number than the friction elements (4) fixed to the smaller support plate (3b).

2. A pad for disc brakes according to claim 1, **characterised in that** said inner edges (10a, 10b) extend along a curved line.

3. A pad for disc brakes according to claim 2, **characterised in that** said inner edge (10a) of said larger support plate (3a) defines an angle measuring approximately 135°, and said inner edge (10b) of said smaller support plate (3b) defines an angle measuring approximately 315°.

4. A pad for disc brakes according to any of the previous claims, **characterised in that** said interlocking portion (2a) has a substantially rectangular shape having two long sides that are at least partially bent so as to define a male portion of a dovetail joint.

5. A pad for disc brakes according to any of the previous claims, **characterised in that** each one of said friction elements has an oblong shape having two parallel long sides that are slightly curved; said friction elements (4) being fixed in said support plates (3a, 3b) so that their relative long edges are arranged along circumferences that are parallel to one another.

## Patentansprüche

1. Belag (1) für eine Scheibenbremse für Eisenbahnfahrzeuge mit mehreren Reibelementen (4), die geeignet sind, auf eine Scheibe der Scheibenbremse zu wirken, und einer hinteren Verriegelungsplatte (2), die einen Verriegelungsabschnitt (2a) aufweist, der geeignet ist, mit einer Struktur der Scheibenbremse reversibel gekoppelt zu sein, und zwei Befestigungsabschnitten (6), die in einem einzelnen Stück zusammen mit dem Verriegelungsabschnitt (2a) hergestellt sind und sich quer sowie auf Gegenseiten relativ zum Verriegelungsabschnitt (2a) selbst erstrecken; wobei der Belag **dadurch gekennzeichnet ist, dass** er zwei Stützplatten (3a, 3b) aufweist, von denen jede an einem jeweiligen Befestigungsabschnitt (6) reversibel befestigt ist; es sich bei den Stützplatten um eine größere Stützplatte (3a), die im Gebrauch geeignet ist, in Entsprechung zu einer eher peripheren Position einer Scheibe der Scheibenbremse angeordnet zu sein, und um eine kleinere Stützplatte (3b) handelt, die im Gebrauch geeignet ist, in Entsprechung zu einer eher mittleren Position einer Scheibe der Scheibenbremse angeordnet zu sein; die Stützplatten (3a, 3b) benachbart zueinander entlang zweier jeweiliger Innenkanten (10a, 10b) angeordnet sind; die Reibelemente (4) an den Stützplatten (3a, 3b) reversibel befestigt sind; und die an der größeren Stützplatte (3a) befestigten Reibelemente (4) eine größere Anzahl als die an der kleineren Stützplatte (3b) befestigten Reibelemente (4) haben.

2. Belag für Scheibenbremsen nach Anspruch 1, **dadurch gekennzeichnet, dass** sich die Innenkanten (10a, 10b) entlang einer gekrümmten Linie erstrecken.

3. Belag für Scheibenbremsen nach Anspruch 2, **dadurch gekennzeichnet, dass** die Innenkante (10a) der größeren Stützplatte (3a) einen Winkel von etwa 135° bildet und die Innenkante (10b) der kleineren Stützplatte (3b) einen Winkel von etwa 315° bildet.

4. Belag für Scheibenbremsen nach einem der vorstehenden Ansprüche, **dadurch gekennzeichnet, dass** der Verriegelungsabschnitt (2a) eine im Wesentlichen rechteckige Form mit zwei langen Seiten hat, die mindestens teilweise so gebogen sind, dass sie einen Steckabschnitt einer Zinkung bilden.

5. Belag für Scheibenbremsen nach einem der vorstehenden Ansprüche, **dadurch gekennzeichnet, dass** jedes der Reibelemente eine längliche Form mit zwei parallelen langen Seiten hat, die leicht gekrümmt sind; wobei die Reibelemente (4) in den Stützplatten (3a, 3b) so befestigt sind, dass ihre relativen langen Kanten entlang von Umfängen angeordnet sind, die parallel zueinander sind.

## Revendications

1. Plaquette (1) destinée à un frein à disque pour des véhicules ferroviaires comprenant une pluralité d'éléments de friction (4) qui sont adaptés pour agir sur un disque du frein à disque, et une plaque d'enclenchement arrière (2) qui comprend une partie d'enclenchement (2a) qui est adaptée pour être couplée de manière réversible avec une structure d'un frein à disque, et deux parties de fixation (6) qui sont fabriquées comme une seule pièce conjointement avec la partie d'enclenchement (2a) et s'étendent transversalement et sur des côtés en regard par rapport à la partie d'enclenchement (2a) elle-même ; ladite plaquette étant **caractérisée en ce qu'**elle comprend deux plaques de support (3a, 3b), dont chacune est fixée de manière réversible à une partie de fixation respective (6) ; lesdites plaques de support étant une plaque de support plus grande (3a) qui est adaptée en utilisation pour être agencée en correspondance d'une position plus périphérique d'un disque du frein à disque, et une plaque de support plus petite (3b) qui est adaptée en utilisation pout être agencée en correspondance d'une position plus centrale d'un disque du frein à disque ; lesdites plaques de support (3a, 3b) étant agencées de manière adjacente l'une à l'autre le long de deux bords intérieurs respectifs (10a, 10b) ; lesdits éléments de friction (4) étant fixés de manière réversible auxdites plaques de support (3a, 3b) ; les éléments de friction (4) fixés à ladite plaque de support plus grande (3a) étant dans un nombre plus grand que les éléments de frictions (4) fixés à la plaque de support plus petite (3b).

2. Plaquette pour freins à disque selon la revendication 1, **caractérisée en ce que** lesdits bords intérieurs (10a, 10b) s'étendent le long d'une ligne courbe.

3. Plaquette pour freins à disque selon la revendication 2, **caractérisée en ce que** ledit bord intérieur (10a) de ladite plaque de support plus grande (3a) définit un angle mesurant approximativement 135°, et ledit bord intérieur (10b) de ladite plaque de support plus petite (3b) définit un angle mesurant approximativement 315°.

4. Plaquette pour freins à disque selon l'une quelconque des revendications précédentes, **caractérisée en ce que** ladite partie d'enclenchement (2a) présente une forme sensiblement rectangulaire présentant deux côtés longs qui sont au moins partiellement courbés de sorte à définir une partie mâle d'un joint en queue d'aronde.

5. Plaquette pour freins à disque selon l'une quelconque des revendications précédentes, **caractérisée en ce que** chacun desdits éléments de friction présente une forme oblongue présentant deux côtés longs parallèles qui sont légèrement courbés ; lesdits éléments de friction (4) étant fixés dans lesdites plaques de support (3a, 3b) de sorte que leurs bords longs relatifs soient agencées le long de circonférences qui sont parallèles l'une à l'autre.
